# EUROPEAN PATENT SPECIFICATION

(11) **EP 2 001 955 B1**
(45) Date of publication and mention of the grant of the patent: **06.10.2010**
(21) Application number: 07726654.2
(22) Date of filing: 06.03.2007
(51) Int. Cl.: C08L 65/00, C08L 65/02

(54) **NEW POLYARYLENE COMPOSITION AND ARTICLES MADE THEREFROM**
NEUE POLYARYLENZUSAMMENSETZUNG UND DAMIT HERGESTELLTE ARTIKEL
NOUVELLE COMPOSITION DE POLYARYLENE ET ARTICLES FABRIQUES A PARTIR DE CELLE-CI

(30) Priority: 07.03.2006 WO PCT/EP2006/060535; 06.09.2006 US 842367 P
(43) Date of publication of application: 17.12.2008
(73) Proprietor: Solvay Advanced Polymers, L.L.C., Alpharetta, GA 30005-3914 (US)
(72) Inventor: THOMAS, David B., Poplarville, Mississippi 39470 (US); MALJKOVIC, Nikica, New Orleans, Louisiana 70125 (US); SCHULER, Timothy, New Orleans, Louisiana 70118 (US); RUSHING, Todd S., Clinton, Mississippi 39506 (US); CARTER, Roy L., Chicago, Illinois 60615 (US)
(74) Representative: Jacques, Philippe
(86) International application number: PCT/EP2007/052095
(87) International publication number: WO 2007/101852

(56) References cited:
- WO-A-93/18076
- US-A- 5 886 130

## Description

### CROSS-REFERENCE TO RELATED APPLICATIONS

The present application claims the benefit of (i) PCT application no. PCT/EP2006/060535 filed March 07, 2006, and (ii) U.S. application no. 60/842,367 filed September 06, 2006.

### FIELD OF THE INVENTION

The present invention relates to a new polyarylene composition comprising polyarylenes of two different specific types, and to articles made therefrom.

### BACKGROUND OF THE INVENTION

Polyarylenes exhibit some outstanding performance properties, including exceptionally high strength, stiffness, hardness, scratch resistance, dimensional stability, great friction and wear properties, high solvent resistance and exceptional low temperature performance.

Polyarylenes are notably commercially available as PRIMOSPIRE^{™} self-reinforced polymers (SRPs), formerly marketed as PARMAX^{®}. The standard commercial grade is PRIMOSPIRE^{™} PR-120 (formerly market as PARMAX^{®} 1200), a kinked rigid-rod polyphenylene, i.e. one containing about 85 mole % of rigid rod-forming recurring units and 15 mole % of kink-forming recurring units. Kink-forming recurring units provide an increased fusability and machinability to this polyphenylene; thus, while shaped articles made from unkinked polyphenylenes of the first generation such as PARMAX^{®} 1000 were often manufactured by a solution process, PRIMOSPIRE^{™} PR-120 polyphenylene can be extruded and compression molded into various shaped articles.

The latest generation of polyarylenes is represented by PRIMOSPIRE^{™} PR-250 (formerly PARMAX^{®} 1500) kinked rigid-rod polyphenylene material, which is still a developmental injection molding grade. These polyarylenes contain a higher amount of kink-forming recurring units (about 50 mole %). They have lower viscosity and consequently better flow performance at high temperature making them especially well-suited for parts requiring injection molding capabilities.

All the so far known polyarylenes, while offering an exceptionally high level of strength and stiffness (which often even exceeds the needs of the applications wherein they are used) suffer irremediably from limitations in toughness-related properties:
- they have limited elongability;
- they have limited impact resistance (as typically characterized by standard notched and unnotched Izod tests).

Further, while being generally acknowledged as materials having a high fire resistance, kinked rigid-rod polyarylenes with a low amount of kink-forming recurring units, a representative thereof being PRIMOSPIRE^{™} PR-120 polyphenylene, do not yet offer the needed level of fire-resistance in certain especially demanding applications, as may be found in aircraft and other civil transportations. On the other hand, as far as the Applicant knows, the fire-resistance properties of kinked rigid-rod polyarylenes with a high amount of kink-forming recurring units, a representative thereof being PRIMOSPIRE^{™} PR-250 polyphenylene, have not been investigated so far.

There is a need for a polymer material which, while offering an exceptionally high level of strength and stiffness (similar to that provided by PRIMOSPIRE^{™} PR-120 and PRIMOSPIRE^{™} PR-250 polyphenylenes) provide further at least one, preferably at least two and still more preferably all the following advantages:
- the polymer material should have increased elongability; and/or
- the polymer material should have increased impact resistance ; and/or
- the polymer material should have increased fire resistance.

### THE INVENTION

It has been surprisingly found that the combination of (i) at least one polyarylene (P1) of a first specific type, characterized by a "low" amount (down to 0%) of kink-forming arylene units such as Primospire^{™} PR-120 polyphenylene (formerly Parmax^{®} 1200), with (ii) at least one polyarylene (P2) of another specific type, characterized by a "high" amount of kink-forming arylene units (up to 100%) such as Primospire^{™} PR-250 polyphenylene, resulted in a composition of matter satisfying the need as above expressed. The intended meaning of the terms "low" and "high" will become clear in the light of what follows.

Thus, the present invention concerns, in its principal aspect, a polymer composition comprising WO-A-93/18076 describes rigid-rod polymers comprising optionally substituted polyphenylene segments.
- at least one polyarylene (P1), of which the efficient arylene recurring units (R1) are a mix (M1) consisting of :
   - from 70 mole % to 100 mole %, based on the total number of moles of efficient arylene recurring units (R1), of rigid rod-forming arylene units (Ra), said rigid rod-forming arylene units (Ra) being optionally substituted by at least one monovalent substituting group with
   - from 0 to 30 mole %, based on the total number of moles of efficient arylene recurring units (R1), of kink-forming arylene units (Rb), said kink-forming arylene units being optionally substituted by at least one monovalent substituting group,
   and
- at least one polyarylene (P2), of which the efficient arylene recurring units (R2) are a mix (M2) consisting of :
   - less than 70 mole %, down to 0 mole %, based on the total number of moles of efficient arylene recurring units (R2), of rigid rod-forming arylene units (Ra), said rigid rod-forming arylene units (Ra) being optionally substituted by at least one monovalent substituting group
      with
   - more than 30 mole %, up to 100 mole %, based on the total number of moles of efficient arylene recurring units (R2), of kink-forming arylene units (Rb), said kink-forming arylene units being optionally substituted by at least one monovalent substituting group.

### Features common to polyarylenes (P1) and (P2)

For the sake of clarity, all the definitions and preferences expressed in the present chapter "Features common to polyarylenes (P1) and (P2)", whatever their concern and whatever the level of preference expressed, can be applied independently from each other to polyarylene (P1) and to polyarylene (P2).

For the purpose of the present invention, an arylene group is a hydrocarbon divalent group consisting of one core composed of one benzenic ring or of a plurality of benzenic rings fused together by sharing two or more neighboring ring carbon atoms, and of two ends.

Non limitative examples of arylene groups are phenylenes, naphthylenes, anthrylenes, phenanthrylenes, tetracenylenes, triphenylylenes, pyrenylenes, and perylenylenes. The arylene groups (especially the numbering of the ring carbon atoms) were named in accordance with the recommendations of the CRC Handbook of Chemistry and Physics, 64th edition, pages C1-C44, especially p. C11-C12.

Arylene groups present usually a certain level of aromaticity; for this reason, they are often reported as "aromatic" groups. The level of aromaticity of the arylene groups depends on the nature of the arylene group; as thoroughly explained in Chem. Rev. 2003, 103, 3449-3605, "Aromaticity of Polycyclic Conjugated Hydrocarbons", the level of aromaticity of a polycyclic aromatic hydrocarbon can be notably quantified by the "index of benzene character" B, as defined on p. 3531 of the same paper; values of B for a large set of polycyclic aromatic hydrocarbon are reported on table 40, same page.

An end of an arylene group is a free electron of a carbon atom contained in a (or the) benzenic ring of the arylene group, wherein an hydrogen atom linked to said carbon atom has been removed. Each end of an arylene group is capable of forming a linkage with another chemical group. An end of an arylene group, or more precisely the linkage capable of being formed by said end, can be characterized by a direction and by a sense; to the purpose of the present invention, the sense of the end of an arylene group is defined as going from the inside of the core of the arylene group to the outside of said core. As concerns more precisely arylene groups the ends of which have the same direction, such ends can be either of the same or opposite sense ; also, their ends can be in the straight foregoing of each other, or not (otherwise said, they can be disjoint).

The polyarylenes (P1) and (P2) are polyarylenes, in that they are polymers of which more than 50 wt. % of the recurring units are efficient arylene recurring units, respectively named recurring (R1) [for the polyarylene (P1)] and (R2) [for the polyarylene (P2)].

Hereinafter, recurring units (R) denote indifferently recurring units (R1) or recurring units (R2). As already above stated, all the definitions and preferences expressed in the present chapter, whatever their concern and whatever the level of preference expressed, can be applied independently from each other to polyarylene (P1) and to polyarylene (P2) ; thus, in particular, all the definitions and preferences expressed in the present chapter regarding recurring units (R) can be applied independently from each other to recurring units (R1) and recurring units (R2).

Efficient arylene recurring units (R) are:
- arylene units, in that they are of one or more formulae consisting of an optionally substituted arylene group ;
- efficient, in that said optionally substituted arylene group is linked by each of its two ends to two other optionally substituted arylene groups via a direct C-C linkage.

That the optionally substituted arylene group is linked by each of its two ends to two other optionally substituted arylene groups via a direct C-C linkage, is an essential feature of the efficient arylene recurring units (R). Thus, an arylene recurring unit which is linked by at least one of its two ends to a group other than an arylene group such as phenylene recurring units ϕ_{1,} ϕ₂ and ϕ₂ below:
- O-ϕ₁-S(=O)₂- ,
- O-ϕ₁-ϕ₂-O-
are not efficient arylene recurring units (R) in the sense of the present invention.

The arylene groups of which the efficient arylene recurring units (R) consist can be unsubstituted. Alternatively, they can be substituted by at least one monovalent substituting group.

The monovalent substituting group is usually not polymeric in nature; its molecular weight is preferably below 500, more preferably below 300, still more preferably below 200 and most preferably below 150.

Should the optionally substituted group be effectively substituted by at least one monovalent substituting group, said monovalent substituting group is advantageously a solubilizing group. A solubilizing group is one increasing the solubility of the polyarylene of concern in at least one organic solvent, in particular in at least one of dimethylformamide, N-methylpyrrolidinone, hexamethylphosphoiic triamide, benzene, tetrahydrofuran and dimethoxyethane, which can be used as solvents during the synthesis of the polyarylene by a solution polymerization process.

The monovalent substituting group is also advantageously a group which increases the fusibility of the polyarylene, i.e. it lowers its glass transition temperature and its melt viscosity, so as to desirably make the polyarylene suitable for thermoprocessing.

Preferably, the monovalent substituting group is chosen from:
- hydrocarbyls such as alkyls, aryls, alkylaryls and aralkyls;
- halogenos such as -Cl, -Br, -F and -I ;
- hydrocarbyl groups partially or completely substituted by at least one halogen atom such as halogenoalkyls, halogenoaryls, halogenoalkylaryls and halogenoaralkyls;
- hydroxyl;
- hydrocarbyl groups substituted by at least one hydroxyl group, such as hydroxyalkyls, hydroxyaryls, hydroxyalkylaryls and hydroxyaralkyls;
- hydrocarbyloxys [-O-R, where R is a hydrocarbyl group], such as alkoxys, aryloxys, alkylaryloxys and aralkyloxys;
- amino (-NH₂);
- hydrocarbyl groups substituted by at least one amino group, such as aminoalkyls and aminoaryls;
- hydrocarbylamines [-NHR or -NR₂, where R is a hydrocarbyl group] such as alkylamines and arylamines;
- carboxylic acids and their metal or ammonium salts, carboxylic acid halides, carboxylic anhydrides;
- hydrocarbyl groups substituted by at least one of carboxylic acids, metals or ammonium salts thereof, carboxylic acid halides and carboxylic anhydrides, such as -R-C(=O)OH where R is an alkyl or an aryl group;
- hydrocarbylesters [-C(=O)OR or -O-C(=O)R, where R is a hydrocarbyl group] such as alkylesters, arylesters, alkylarylesters and aralkylesters;
- amido [-C(=O)NH₂];
- hydrocarbyl groups substituted by at least one amido group;
- hydrocarbylamide monoesters [-C(=O)NHR or -NH-C(=O)-R, where R is a hydrocarbyl group], such as alkylamides, arylamides, alkylarylamides and aralkylamides, and hydrocarbylamide diesters [-C(=O)NR,- or -N-C(=O)R₂, where R are a hydrocarbyl groups], such as dialkylamides and diarylamides;
- sulfinic acid (-SO₂H), sulfonic acid (-SO₃H), their metal or ammonium salts;
- hydrocarbylsulfones [-S(=O)₂-R, where R is the hydrocarbyl group], such as alkylsulfones, arylsulfones, alkylarylsulfones, aralkylsulfones;
- aldehyde [-C(=O)H] and haloformyls [-C(=O)X, wherein X is a halogen atom];
- hydrocarbylketones [-C(=O)-R, where R is a hydrocarbyl group], such as alkylketones, arylketones, alkylarylketones and aralkylketones;
- hydrocarbyloxyhydrocarbylketones [-C(=O)-R¹-O-R², where R¹ is a divalent hydrocarbon group such as an alkylene, an arylene, an alkylarylene or an aralkylene, preferably a C₁-C₁₈ alkylene, a phenylene, a phenylene group substituted by at least one alkyl group, or an alkylene group substituted by at least one phenyl group ; and R² is a hydrocarbyl group, such as an alkyl, aryl, alkylaryl or aralkyl group], such as alkyloxyalkylketones, alkyloxyarylketones, alkyloxyalkylarylketones, alkyloxyaralkylketones, aryloxyalkylketones, aryloxyarylketones, aryloxyalkylarylketones and aryloxyaralkylketones;
- any of the above groups comprising at least one hydrocarbyl group or a divalent hydrocarbon group R¹, wherein said hydrocarbyl group or said R¹ is itself substituted by at least one of the above listed monovalent substituting groups, e.g. an arylketone -C(=O)-R, where R is an aryl group substituted by one hydroxyl group;
   where:
- the hydrocarbyl groups contain preferably from 1 and 30 carbon atoms, more preferably from 1 to 12 carbon atoms and still more preferably from 1 to 6 carbon atoms;
- the alkyl groups contain preferably from 1 to 18 carbon atoms, and more preferably from 1 to 6 carbon atoms ; very preferably, they are chosen from methyl, ethyl, n-propyl, isopropyl, n-butyl, isobutyl and tert-butyl;
- the aryl groups are defined as monovalent groups consisting of one end and one core composed of one benzenic ring (such the phenyl group) or of a plurality of benzenic rings directly linked to each other via a carbon-carbon linkage (such as the biphenyl group) or fused together by sharing two or more neighboring ring carbon atoms (such as the naphthyl groups), and wherein the ring carbon atoms are possibly substituted by at least one nitrogen, oxygen or sulfur atom ; preferably, in the aryl groups, no ring carbon atom is substituted;
- the aryl groups contain preferably from 6 to 30 carbon atoms ; more preferably, they are phenyl groups;
- the alkyl group which is contained in the alkylaryl groups meets the preferences of the alkyl groups as above expressed;
- the aryl group which is contained in the aralkyl groups meets the preferences of the aryl groups as above expressed.

More preferably, the monovalent substituting group is chosen from hydrocarbylketones [-C(=O)-R, where R is a hydrocarbyl group] and hydrocarbyloxyhydrocarbylketones [-C(=O)-R¹-O-R², where R¹ is a divalent hydrocarbon group and R² is a hydrocarbyl group], said hydrocarbylketones and hydrocarbyloxyhydrocarbylketones being unsubstituted or substituted by at least one of the above listed monovalent substituting groups.

Still more preferably, the monovalent substituting group is chosen from arylketones and aryloxyarylketones, said arylketones and aryloxyarylketones being unsubstituted or substituted by at least one of the above listed monovalent substituting groups.

Most preferably, the monovalent substituting group is an (unsubstituted) arylketone, in particular it is phenylketone [-C(=O)-phenyl].

The core of the optionally substituted arylene group of the efficient arylene recurring units (R), is composed of preferably at most 3, more preferably at most 2, and still more preferably at most one benzenic ring. Then, when the core of the optionally substituted arylene group of the efficient arylene recurring units (R) is composed of one benzenic ring, the efficient arylene recurring units (R) are of one or more formulae consisting of an optionally substituted phenylene group, provided said optionally substituted phenylene group is linked by each of its two ends to two other optionally substituted arylene groups via a direct C-C linkage.

As above explained, the optionally substituted arylene group of the efficient arylene recurring units (R) is linked by each of its two ends to two other optionally substituted arylene groups via a direct C-C linkage. Preferably, it is linked by each of its two ends to two other optionally substituted phenylene groups via a direct C-C linkage.

As also above explained, both ends of the optionally substituted arylene group of the efficient arylene recurring units (R) can be characterized notably by a direction and by a sense.

A first set of possible efficient arylene recurring units (R) is composed of optionally substituted arylene groups, the ends of which
- have the same direction,
- are of opposite sense, and
- are in the straight foregoing of each other
[hereafter, rigid rod-forming arylene units (Ra)].

As already explained for recurring units (R) in general, rigid rod-forming arylene units (Ra) are efficient, in that they are linked by each of their two ends to two other optionally substituted arylene groups via a direct C-C linkage.

Non limitative examples of optionally substituted arylene groups of which the rigid rod-forming arylene units (Ra) are composed, include:

| | |
|---|---|
| 1,4-phenylene (also named p-phenylene) | 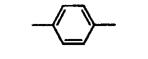 |
| 1,4-naphthylene | 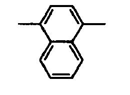 |
| 1,4-phenanthiylene and 2,7-phenanthrylene | 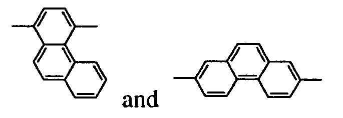 |
| 1,4-anthrylene and 9,10-anthrylene | 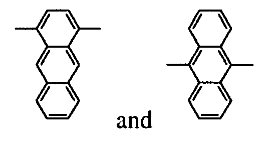 |
| 2,7-pyrenylene | 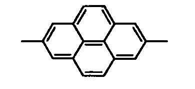 |
| 1,4-naphthacenylene and 5,12-naphthacenylene | 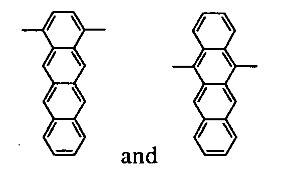 |
| 1,4-chrysenylene | 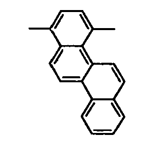 |
| 1,4-triphenylylene and 2,7-triphenylylene | 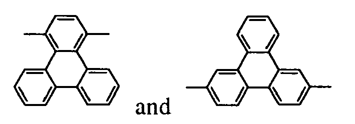 |
| 1,4-pentacenylene, 5,14-pentacenylene and 6,13-pentacenylene | 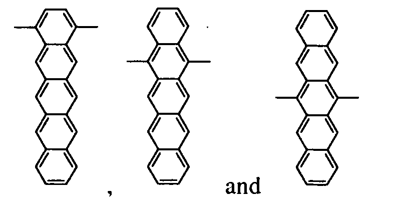 |
| 1,6-coronenylene | 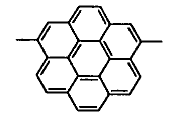 |
| 1,4-trinaphthylenylene, 2,9-trinaphthylenylene and 5,18-trinaphthylenylene | 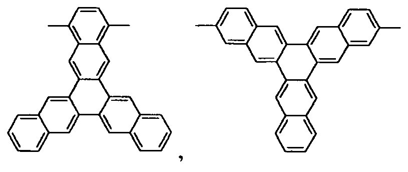 and 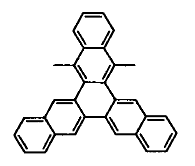 |

and any of these groups substituted by at least one monovalent substituting group, as above defined, in particular by a phenylketone group.

Optionally substituted p-phenylenes are preferred as rigid rod-forming arylene units (Ra).

The above expressed definitions and preferences for recurring units (Ra) can be applied indifferently from each other to recurring units (Ra) possibly contained in the polyarylene (P1) as recurring units (R1), and to recurring units (Ra) possibly contained in the polyarylene (P2) as recurring units (R2).

Rigid rod-forming arylene units (Ra), when contained in the polyarylenes (P1) and (P2), result in straight polymer chains exhibiting an outstanding rigidity. For this reason, such polyarylenes are commonly referred to as "rigid-rod polymers".

A second set of possible efficient arylene recurring units (R) is composed of optionally substituted arylene groups, the ends of which
- either have a different direction, forming thus together an angle between 0 and 180°, said angle being possibly acute or obtuse,
- or have the same direction and the same sense,
- or have the same direction, are of opposite sense and are disjoint (i.e. not in the straight foregoing of each other)
[globally hereafter referred to as kink-forming arylene units (Rb)].

As above explained for recurring units (R) in general, kink-forming arylene units (Rb) are efficient, in that they are linked by each of their two ends to two other optionally substituted arylene groups via a direct C-C linkage.

A first subset of possible kink-forming arylene units (Rb) is composed of optionally substituted arylene groups, the ends of which have a different direction, forming together an acute angle [kink-forming arylene units (Rb-1)]. Non limitative examples of optionally substituted arylene groups the ends of which have a direction different from each other, include:

| | |
|---|---|
| 1,2-phenylene (or o-phenylene) | 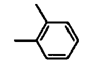 |
| 1,2-, 2,3- and 1,7-naphtylenes | 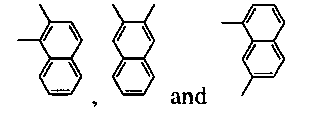 |
| 1,2-, 1,8-, 1,9-, 2,3-, 2,5- and 2,10-phenanthrylenes | 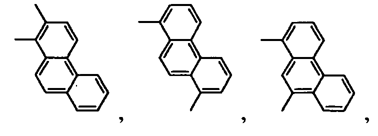 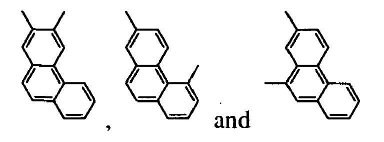 |
| 1,2- and 1,7-anthrylenes | 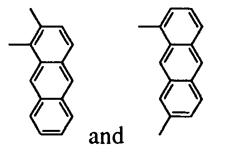 |

and any of these groups substituted by at least one monovalent substituting group, as above defined, in particular by a phenylketone group.

A second subset of possible kink-forming arylene units (Rb) is composed of optionally substituted arylene groups, the ends of which have a different direction, forming together an obtuse angle [kink-forming units (Rb-2)]. Non limitative examples of optionally substituted arylene groups the ends of which have a direction different from each other, include:

| | |
|---|---|
| 1,3-phenylene (or m-phenylene) | 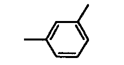 |
| 1,3 - and 1,6-naphtylenes | 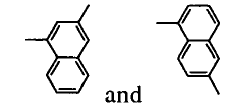 |
| 1,3-, 1,5-, 1,7-, 2,4-, 2,9- and 3,10- phenanthrylenes | 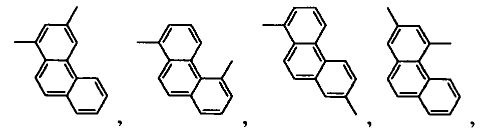 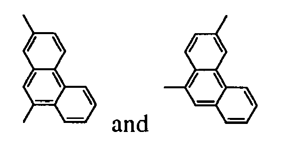 |
| 1,3- and 1,6-anthrylenes | 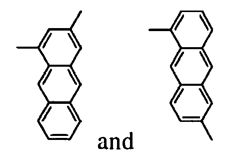 |

and any of these groups substituted by at least one monovalent substituting group, as above defined, in particular by a phenylketone group.

A third subset of possible kink-forming arylene units (Rb) is composed of optionally substituted arylene groups, the ends of which have the same direction and the same sense [kink-forming arylene units (Rb-3)]. Non limitative examples of optionally substituted arylene groups the ends of which the same direction and the same sense include:

| | |
|---|---|
| 1,8-naphthylene | 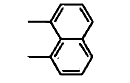 |
| 1,10- and 3,5-phenanthrylenes | 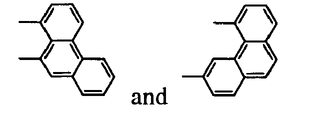 |
| 1,8- and 1,9-anthrylenes | 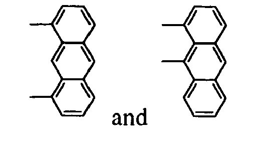 |

and any of these groups substituted by at least one monovalent substituting group, as above defined, in particular by a phenylketone group.

A fourth subset of possible kink-forming arylene units (Rb) is composed of optionally substituted arylene groups, the ends of which have the same direction, are of opposite sense and are disjoint [kink-forming arylene units (Rb-4)]. Non limitative examples of such optionally substituted arylene groups include:

| | |
|---|---|
| 1,5- and 2,6-naphtylenes | 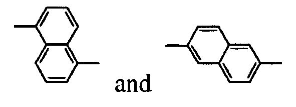 |
| 1,6-, 3,9- and 4,10-phenanthrylenes | 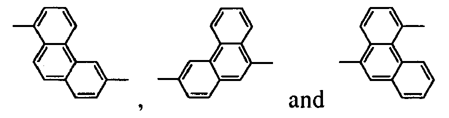 |
| 1,5-, 1,10- and 2,6-anthrylenes | 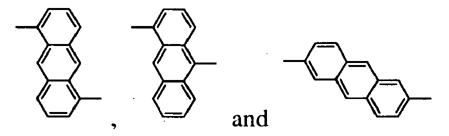 |

and any of these groups substituted by at least one monovalent substituting group, as above defined, in particular by a phenylketone group.

Preferably, kink-forming arylene units (Rb) are chosen from kink-forming arylene units (Rb-1), kink-forming arylene units (Rb-2) and kink-forming arylene units (Rb-4). More preferably, kink-forming arylene units (Rb) are chosen from kink-forming arylene units (Rb-1) and kink-forming arylene units (Rb-2). Still more preferably, kink-forming arylene units (Rb) are chosen from kink-forming arylene units (Rb-1). Even still more preferably, kink-forming arylene units (Rb) are optionally substituted m-phenylenes.

The above expressed definitions and preferences for recurring units (Rb) and its variations (Rb-1), (Rb-2), (Rb-3) and (Rb-4), can be applied indifferently from each other to recurring units (Rb) possibly contained in the polyarylene (P1) as recurring units (R1), and to recurring units (Rb) possibly contained in the polyarylene (P2) as recurring units (R2).

Kink-forming arylene units (Rb), when contained in the polyarylenes (P1) and (P2), result in more or less kinked polymer chains, exhibiting a higher solubility and fusibility than straight polymer chains. For this reason, such polyarylenes are commonly referred to as "kinked polymers".

The polyarylenes (P1) and (P2) may further comprise recurring units (R*), different from efficient arylene recurring units (R).

Recurring units (R*) may contain or not at least one strong divalent electron withdrawing group linked on each of its ends to an arylene group. Non limitative examples of recurring units (R*) free of such strong divalent electron withdrawing group are: 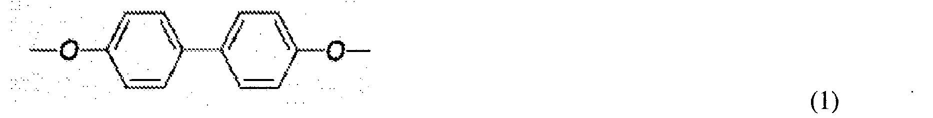 and

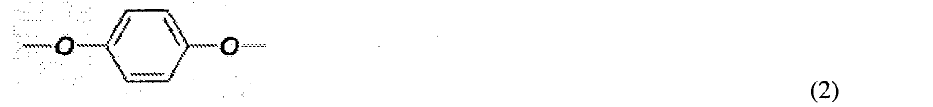

Recurring units (R*) contain preferably at least one strong divalent electron withdrawing group linked on each of its ends to an arylene group, in particular a p-phenylene group. The divalent electron withdrawing group is preferably chosen from the sulfone group [- S(=O)₂- ], the carbonyl group [- C(=O) -], the vinylene group [-CH=CH- ], the sulfoxide group [-S(=O)- ], the azo group [-N=N-], saturated fluorocarbon groups like -C(CF₃)₂-, organic phosphine oxide groups [- P(=O)(=Rₕ) -, where Rₕ is a hydrocarbyl group] and the ethylidene group [- C (=CA₂) - , where A can be hydrogen or halogen]. More preferably, the divalent electron withdrawing group is chosen from the sulfone group and the carbonyl group. Still more preferably, recurring units (R*) are chosen from:
(i) recurring units of formula 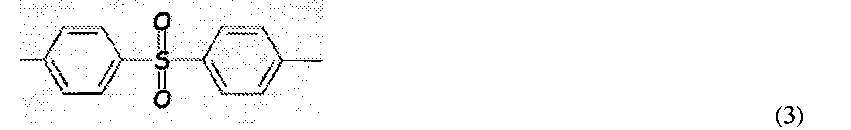
(ii) recurring units of formula 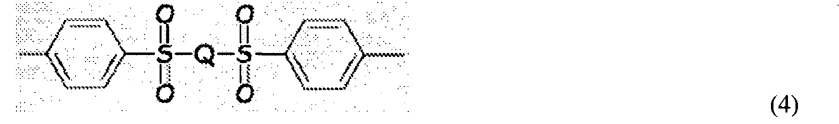 wherein Q is a group chosen from 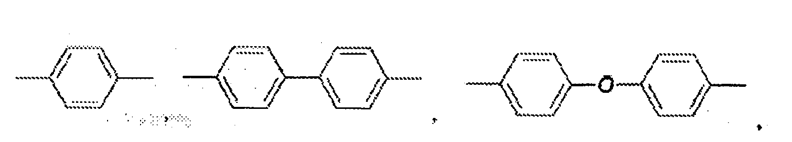 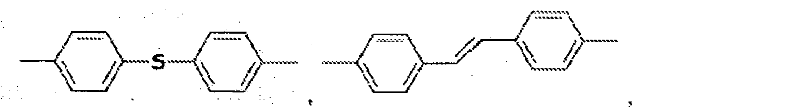 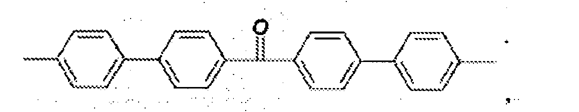 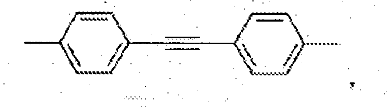 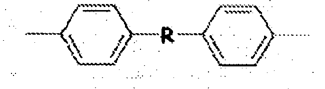 with R being: 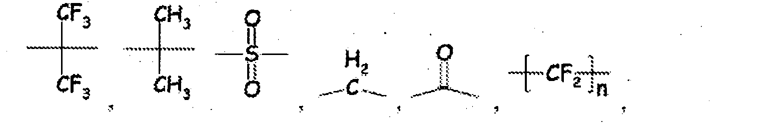 - (CH₂)_{n'}-,
   with n being an integer from 1 to 6 and n' being an integer from 2 to 6, Q being preferably chosen from 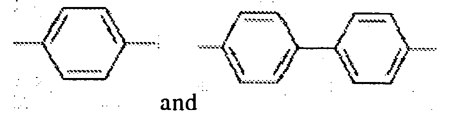
(iii) recurring units of formula 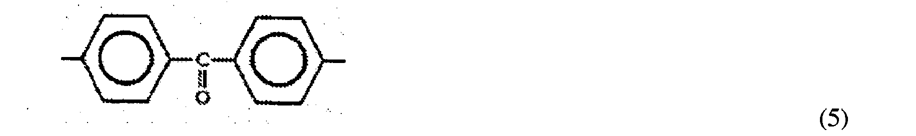
(iv) recurring units of formula 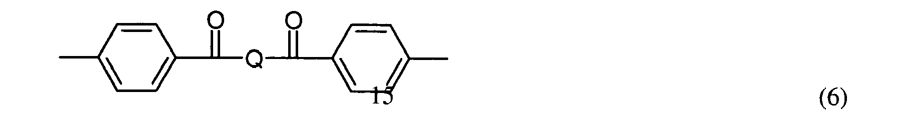
wherein Q is as above defined.

Preferably more than 75 wt. % and more preferably more than 90 wt. % of the recurring units of the polyarylenes (P1) and (P2) are efficient arylene recurring units (R). Still more preferably, essentially all, if not all, the recurring units of the polyarylenes (P1) and (P2) are efficient arylene recurring units (R).

The polyarylenes (P1) and (P2) have a number average molecular weight of advantageously greater than 1000, preferably greater than 5000, more preferably greater than about 10000 and still more preferably greater than 15000. On the other hand, the number average molecular weight of the polyarylenes (P1) and (P2) is usually below 100000, and preferably below 70000. The number average molecular weight of the polyarylenes (P1) and (P2) may be above 35000; alternatively, it may be of at most 35000, 25000 or 20000. The number average molecular weight of a polyarylene, in particular that of the polyarylenes (P1) and (P2), is advantageously determined by : (1) measuring a "relative" number average molecular weight of the polyarylene of conern by Gel Permeation Chromatography (GPC) using polystyrene calibration standards, then (2) dividing the so-measured "relative" number average molecular weight by a factor 2. It is proceeded accordingly because the skilled in the art who is a specialist of polyarylenes knows that their "relative" number average molecular weight, as measured by GPC, are generally off by a factor of about 2 times ; it has already been accounted for this correction factor in all the above cited lower and upper limits of molecular weight.

They can be amorphous (i.e. it has no melting point) or semi-crystalline (i.e. it has a melting point). They are preferably amorphous.

They have a glass transition temperature of advantageously above 50°C, preferably above 120°C and more preferably above 150°C.

The polyarylenes (P1) and (P2) can be prepared by any method. A method well known in the art to prepare them comprises polymerizing, preferably by reductive coupling, (i) at least one dihaloarylene molecular compound consisting of an optionally substituted rigid rod-forming arylene group, which is linked on each of its two ends to one halogen atom, such as chlorine, bromine and iodine, with (ii) at least one dihaloarylene molecular compounds consisting of an optionally substituted kink-forming arylene group, which is linked on each of its two ends to one halogen atom, such as chlorine, bromine, iodine, and fluorine. The elimination of the halogen atoms from the dihaloarylene molecular compounds results in the formation of respectively optionally substituted rigid rod-forming and optionally substituted kink-forming arylene groups.

Thus, for example:
- the elimination of both chlorine atoms from a molecule of p-dichlorobenzene, p-dichlorobiphenyl or their homologous of general formula Cl-(ϕ)_{N}-Cl, N being an integer from 3 to 10, results in the formation of respectively 1, 2 or N adjacent p-phenylene units (rigid rod-forming arylene units); thus, p-dichlorobenzene, p-dichlorobiphenyl and their homologous of general formula Cl-(ϕ)_{N}-Cl, N as above defined, can be polymerized, so as to form p-phenylene units;
- 2,5-dichlorobenzophenone (p-dichlorobenzophenone) can be polymerized, so as to form 1,4-(benzoylphenylene) units (also rigid rod-forming arylene units);
- m-dichlorobenzene can be polymerized, so as to form m-phenylene units (kink-forming arylene units).

The combined weight of the polyarylene (P1) and of the polyarylene (P2), based on the total weight of the polymer composition, is advantageously above 25 %, preferably above 50 %, more preferably above 80 %, and still more preferably above 95 %. Excellent results were obtained when the polymer composition consisted essentially of, or even consisted of, the polyarylene (P1) and the polyarylene (P2).

### Features specific to the polyarylene (P1)

The efficient arylene recurring units (R1) of the polyarylene (P1) must be of a very specific type, namely they must be a mix (M1) consisting of:
- from 70 mole % to 100 mole %, based on the total number of moles of efficient arylene recurring units (R1), of rigid rod-forming arylene units (Ra), said rigid rod-forming arylene units (Ra) being optionally substituted by at least one monovalent substituting group
   with
- from 0 to 30 mole %, based on the total number of moles of efficient arylene recurring units (R1), of kink-forming arylene units (Rb), said kink-forming arylene units being optionally substituted by at least one monovalent substituting group.

In the mix (M1), the number of moles of the kink-forming arylene units (Rb), based on the total number of moles of the efficient arylene recurring units (R1), is preferably of at least 1.0 %, more preferably at least 5 % and still more preferably at least 10 %. On the other hand, in the mix (M1), the number of moles of the kink-forming arylene units (Rb), based on the total number of moles of the efficient arylene recurring units (R1), is preferably of at most 25 %, more preferably at most 21 %, still more preferably at most 18 %.

Good results were obtained when the efficient arylene recurring units (R1), of the polyarylene (P1) were a mix (M1) consisting of p-phenylene units substituted by a phenylketone group with unsubstituted m-phenylene units, in a mole ratio of about 85:15.

Good results were also obtained when the polyarylene (P1) was a kinked rigid-rod polyphenylene copolymer, essentially all, if not all, the recurring units of which consisted of a mix (M1) of p-phenylene substituted by a phenylketone group with unsubstituted m-phenylene in a mole ratio p-phenylene:m-phenylene of from 75:25 to 99.0:1.0, preferably of from 79:21 to 95:5, more preferably of from 82:18 to 90: 10, and still more preferably of about 85:15. Such a kinked rigid-rod polyphenylene copolymer is commercially available from Solvay Advanced Polymers, L.L.C. as PRIMOSPIRE^{™} PR-120 polyphenylene.

The weight of the polyarylene (P1), based on the total weight of the polymer composition, is advantageously of at least 1 %, preferably of at least 5 %, more preferably of at least 10 % and still more preferably of at least 15 %. On the other hand, the weight of the polyarylene (P1), based on the total weight of the polymer composition, is advantageously of at most 99 %, preferably of at most 95 %, more preferably of at most 75 % and still more preferably of at most 60%.

In a certain particular embodiment of the present invention (Emb-A1), the weight of the polyarylene (P1), based on the total weight of the polymer composition, is of at least 35 %, and ranges preferably from 35 to 60 %. In a certain other particular embodiment of the present invention (Emb-B1), the weight of the polyarylene (P1), based on the total weight of the polymer composition, is below 35%, and ranges preferably between 35 %, down to 15 %.

In the present invention, one, two, three, or even more than three different polyarylenes (P1) can be used.

### Features specific to the polyarylene (P2)

The efficient arylene recurring units (R2) of the polyarylene (P2) must be of a very specific type, namely they must be a mix (M2) consisting of :
- less than 70 mole %, down to 0 mole %, based on the total number of moles of efficient arylene recurring units (R2), of rigid rod-forming arylene units (Ra), said rigid rod-forming arylene units (Ra) being optionally substituted by at least one monovalent substituting group
   with
- more than 30 mole %, up to 100 mole %, based on the total number of moles of efficient arylene recurring units (R2), of kink-forming arylene units (Rb), said kink-forming arylene units being optionally substituted by at least one monovalent substituting group.

In the mix (M2), the number of moles of the kink-forming arylene units (Rb), based on the total number of moles of the efficient arylene recurring units (R2), is preferably of at least 35 %, more preferably at least 40 % and still more preferably at least 45 %. On the other hand, in the mix (M2), the number of moles of the kink-forming arylene units (Rb), based on the total number of moles of the efficient arylene recurring units (R2), is preferably of at most 90 %, more preferably at most 75 %, still more preferably at most 65 % and most preferably at most 55 %.

Good results were obtained when the efficient arylene recurring units (R2) of the polyarylene (P2) were a mix (M2) consisting of p-phenylene units substituted by a phenylketone group with unsubstituted m-phenylene units, in a mole ratio of about 50:50.

Good results were also obtained when the polyarylene (P2) was a kinked rigid-rod polyphenylene copolymer, essentially all, if not all, the recurring units of which consisted of a mix (M2) of p-phenylene substituted by a phenylketone group with unsubstituted m-phenylene in a mole ratio p-phenylene:m-phenylene of from 25:75 to 65:35, preferably of from 35:65 to 60:40, more preferably of from 45:55 to 55:45, and still more preferably of about 50:50. Such a kinked rigid-rod polyphenylene copolymer is commercially available from Solvay Advanced Polymers, L.L.C. as PRIMOSPIRE^{™} PR-250 polyphenylene.

The weight of the polyarylene (P2), based on the total weight of the polymer composition, is advantageously of at least 1 %, preferably of at least 5 %, more preferably of at least 25 % and still more preferably of at least 40 %. On the other hand, the weight of the polyarylene (P2), based on the total weight of the polymer composition, is advantageously of at most 99 %, preferably of at most 95 %, more preferably of at most 90 % and still more preferably of at most 85 %.

In a certain particular embodiment of the present invention [(Emb-A2), which is preferably the same embodiment as (Emb-A1), referred to in the chapter related to polyarylene (P1)], the weight of the polyarylene (P2), based on the total weight of the polymer composition, is of at most 65 %, and ranges preferably from 40 to 65 %. In a certain other particular embodiment of the present invention [(Emb-B2), which is preferably the same embodiment as (Emb-B1), referred to in the chapter related to polyarylene (P1)], the weight of the polyarylene (P2), based on the total weight of the polymer composition, is above 65%, and ranges preferably between 65 %, up to 85 %.

The weight of the polyarylene (P2), based on the combined weight of the polyarylene (P1) and the polyarylene (P2), is advantageously of at least 1 %, preferably of at least 5 %, more preferably of at least 25 % and still more preferably of at least 40 %. On the other hand, the weight of the polyarylene (P2), based on the combined weight of the polyarylene (P1) and the polyarylene (P2), is advantageously of at most 99 %, preferably of at most 95 %, more preferably of at most 90 % and still more preferably of at most 85 %.

In a certain particular embodiment of the present invention, the weight of the polyarylene (P2), based on the combined weight of the polyarylene (P1) and the polyarylene (P2), is of at most 65 %, and ranges preferably from 40 to 65 %. In a certain other particular embodiment of the present invention, the weight of the polyarylene (P2), based on the combined weight of the polyarylene (P1) and the polyarylene (P2), is above 65%, and ranges preferably between 65 %, up to 85 %.

In the present invention, one, two, three, or even more than three different polyarylenes (P2) can be used.

### Optional ingredients of the invented polymer composition

The invented polymer composition may further contain a variety of other polymers, additives, fillers, collectively called ingredients. Conventional ingredients of polyarylene compositions, include fibrous reinforcing agents, particulate fillers and nucleating agents such as talc and silica, adhesion promoters, compatibilizers, curing agents, lubricants, metal particles, mold release agents, organic and/or inorganic pigments like TiO₂ and carbon black, dyes, flame retardants, smoke-suppressing agents, heat stabilizers, antioxidants, UV absorbers, tougheners such as rubbers, plasticizers, anti-static agents, melt viscosity depressants such as liquid crystalline polymers.

In a particular embodiment, the invented polymer composition further comprises a thermoplastic polymer selected from the group consisting of polyamides, polyimides, polyetherimides, polyamideimides, polyarylsulfones, polyphenylsulfones, polyetherketones, polyetheretherketones, polyetherketoneketones, polyarylene ethers, polyphenylene ethers, poly(2,6-dimethyl-1,4-phenylene ether), polyphenylene sulfides, polyethersulfones, polybenzimidazoles, polycarbonates, polyesters, polyolefins, poly(methyl pentene), polytetrafluoroethylene, polyethylene, polypropylene, liquid crystalline polymers, halogenated polymers, and mixtures thereof.

In another particular embodiment, the invented polymer composition further contains a fibrous reinforcing agent, in particular an inorganic fibrous reinforcing agent such as glass fiber or carbon fiber. Thus, in a certain particular embodiment, the invented polymer composition comprises from 10 to 50 wt. %, in particular from 20 to 30 wt. %, of a reinforcing agent (all percentages based on the total weight of the polymer composition) ; an example of such a polymer composition is one composed of 35 wt. % of a polyarylene (P1), 35 wt. % of polyarylene (P2) homopolymer and 30 wt. % of glass fiber.

In still another particular embodiment, the invented polymer composition further contains an additive capable of promoting the formation of a char layer when the polymer composition is in contact with the flames of a fire [hereinafter, "char promoter"] ; without being bound by any theory, the char layer would protect the core of polymer composition, slowing down its degradation. The char promoter may be an organic compound, such as a phenoxy derivative; alternatively, it may be inorganic, such as an oxide, a salt, or a combination thereof. The char promoter is preferably a combination of one or more oxides and one or more salts. Besides, the char promoter is preferably composed of one or more oxides, salts or combinations thereof, of one or more elements of families 3 to 12 of the Periodic Table of the Elements, more preferably of one or more elements of families 6, 7 and 11, and still more preferably of one or more elements selected from the group of Cr, Mo, W, Mn, Cu and Ag. Excellent results in terms of fire resistance were obtained when using CuCr₂O₄.MnO as the char promoter. CuCr₂O₄.MnO is notably commercially available as Engelhard Meteor Plus 9875 Black brand pigment. In this particular embodiment, the invented polymer composition comprises generally between 0.01 and 10 wt. % of the char promoter, based on the total weight of the polymer composition. The char promoter amount is preferably of at least 0.1 wt. %, and very preferably of at least 0.2 wt. % ; besides, it is preferably of at most 5 wt. %, and very preferably of at most 2 wt. %.

The weight of the optional ingredients, based on the total weight of the invented polymer composition, is advantageously below 75 %, preferably below 50 %, more preferably below 25 % and still more preferably below 10 %. Excellent results were obtained when the invented polymer composition was essentially free, or even was completely free, of said optional ingredients.

### Embodiment (E*)

In still another a particular embodiment (E*); the invented polymer composition further comprises a poly(aryl ether sulfone), namely a polymer of which at least 5 wt. % of the recurring units are recurring units of one ore more formulae comprising at least one arylene group, at least one ether group (-O-) and at least one sulfone group [-S(=O)₂-].

The poly(aryl ether sulfone) may be a poly(biphenyl ether sulfone), in particular a polyphenylsulfone. To the purpose of the present invention, a poly(biphenyl ether sulfone) is intended to denote polymer of which more than 50 wt. % of the recurring units are recurring units of one ore more formulae containing at least one p-biphenylene group: 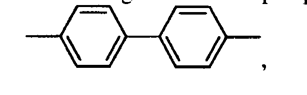 at least one ether group (-O-) and at least one sulfone group [-S(=O)₂-].

To the purpose of the present invention, a polyphenylsulfone is intended to denote any polymer of which more than 50 wt. % of the recurring units are recurring units:

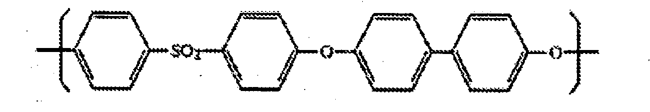

In embodiment (E*), the polyarylenes (P1) and (P2) may meet all the characteristics of the polyphenylenes described in PCT/EP2006/060535, as long as they are compatible with those of respectively the polyarylenes (P1) and (P2) described in the present document.

The person skilled in the art will understand that the invention is not intended to be limited to this particular embodiment (E*), but encompasses also any embodiment other than (E*) which is described in the present document. Besides, various modifications to the embodiments described in the present document will be readily apparent to those skilled in the art, and the generic principles defined herein may be applied to other embodiments without departing from the spirit and scope of the appended claims.

### The preparation of the invented polymer composition

The invented polymer composition can be prepared by any method. Another aspect of the present invention is directed to a method for preparing the polymer composition as above described which comprises melt mixing the polyarylene (P1) with the polyarylene (P2).

The melt mixing of the polyarylene (P1) with the polyarylene (P2) can be achieved by any appropriate means. The melt mixing is advantageously made under a sufficiently high shear, so as to achieve a high degree of mixing of both polymers in the invented polymer composition ("shear-mixing"). The melt mixing can notably be achieved in a desirable manner by extruding the polyarylene (P1) with the polyarylene (P2), so as to obtain strands of the invented polymer composition. Very preferably, the so-obtained strands are then chopped into pellets.

The invented method preferably further comprises the step of dry mixing the polyarylene (P1) with the polyarylene (P2), preferably in powder or in granular form, prior to the mixing step.

### End uses of the invented polymer composition

Still another aspect of the present invention is directed to a shaped article or a part of a shaped article comprising the polymer composition as above described, or prepared by the process as above described.

Non limitative examples of shaped articles or part of shaped articles in accordance with the present invention include:

### - Films

Many different methods may be used to form films. Either continuous or batch processes may be used.

Films may be formed from solution; the solution comprises generally an organic liquid (solvent), which dissolves advantageously the polyarylenes (P1) and (P2).

Films may also be formed from the melt of the polymer composition. Films may be extruded from the melt through a slit. Films may be formed by blow extrusion.

Films may also be further processed by stretching and/or annealing. Special films such as bilayers, laminates, porous films, textured films may be produced by techniques known in the art.

Films may be oriented by stretching. Stretching along one dimension will result in uniaxial orientation. Stretching in two dimensions will give biaxial orientation. Stretching may be aided by heating near the glass transition temperature. Stretching may also be aided by plasticizers. More complex processes such as applying alternating cycles of stretching and annealing may also be used.

### - Fibers

Fibers comprising the invented polymer composition may be formed by known techniques. They may be formed notably from solution, or from the melt of the polymer composition.

### - Coatings

In contrast with films which are generally uncoated, coatings are usually coated on a substrate. The expression "coated on a substrate" should be understood in its common sense, i.e. that the coating forms a cover over the surface of a substrate, thereby without including any limitation as to the process used to achieve the coating. The surface of the substrate may be partly or completely covered by the coating.

The thickness of the coating is usually of at least 1 µm, preferably of at least 5 µm, more preferably of at least 10 µm, and still more preferably of at least 20 µm. Besides, the thickness of the coating is usually of at most 10000 µm, preferably of at most 1000 µm, more preferably of at most 500 µm. In certain embodiments, the thickness of the coating may be of no more than 200 µm, and even non more than 100 µm.

Coatings may be formed by known techniques, including but not limited to, powder coating, laminating preformed films, coating from solution or from the melt.

An aspect of the present invention is an article comprising a substrate, onto which the coating as above described is coated.

A particular aspect of the present invention of particularly high technical interest is directed to the use of the coating as above described, for ablative insulation. Accordingly, the coating is coated on a substrate such as a metal, and the coating is submitted to an aggressive agent which destroys partly or completely the coating ; the coating is then used as a "sacrificed" layer, to protect the substrate against the aggressive agent. A first type of aggressive agent is a body which is in relative motion with regard to the coating and rubs against it ; the body is usually more abrasive than the coating itself. Another type of aggressive agent lies in flames, which may originate from uncontrolled or controlled fires, in particular from the deliberate combustion of fuels. Still another type of aggressive agent is chosen from chemicals. Combinations of these different types of aggressive agents are also encompassed.

### - Membranes

The polymer composition as described or prepared by the process as described may be fabricated into membranes useful for separations of mixed gases, liquids and solids.

### - Other shaped articles or parts of shaped articles

The polymer composition as described or prepared by the process as described may also be fabricated into sheets, and various three-dimensional shaped articles and parts of shaped articles.

Various molding techniques may be used to form shaped articles from invented polymer composition:

### - Molding techniques

Powders, pellets, beads, flakes, reground material or other forms of the invented polymer composition may be molded, with or without liquid or other additives, premixed or fed separately. In particular embodiments, the invented polymer composition may be compression molded. Exact conditions may be determined by trial and error molding of small samples. Upper temperature limits may be estimated from thermal analysis such as thermogravimetric analysis. Lower temperature limits may be estimated from Tg as measured for example by dynamic mechanical thermal analysis (DMTA), differential scanning calorimetry (DSC). The polymer composition as described or prepared by the process as described can be injection molded. It is also desirable if the polymer composition can be remelted several times without degradation, so that regrind from molding processes can be used. One skilled in the art will recognize that other factors also influence injection moldability including the material's stress relaxation properties and the temperature dependence of melt viscosity.

### - Extrusion techniques

The polymer composition as described or prepared by the process as described can also be extruded. Non-limiting examples include angle, channel, hexagonal bar, hollow bar, I-beam, joining strip, tubes, rectangular tube, rod, sheet, plate, square bar, square tube, T-section, thin-walled tubes, microtubes, strands, rectangular strands, or other shapes as is required for a particular application. Related to extrusion is pultrusion, wherein a fiber reinforcement, such as glass or carbon fiber, is continuously added to a matrix of extruded invented polymer composition at molten state; composites with exceptional moduli and compressive strength will result.

### - Thermoforming

Sheet stock may be cut, stamped, welded, or thermally formed. For example, printed wiring boards may be fabricated from sheet or thick films by a process wherein copper is deposited on to one or both sides, patterned by standard photolithographic methods, etched, then holes are drilled, and several such sheets laminated together to form a finished board. Sheet and film may also be thermoformed into any variety of housings, cabinets, containers, covers, chassis, plates, panels, fenders, hoods.

Still other examples of articles are : an angle, channel, hexagonal bar, hollow bar, I-beam, joining strip, tube, rectangular tube, rod, sheet, plate, square bar, square tube, T-section, thin-walled tube, microtube, strands, rectangular strand, a fiber, a filter, a radome, a housing, a cabinet, a container, a cover, a chassis, a plate, a panel, a fender, a hood, a dielectric layer of a multichip module, a molded part for aircraft window reveals, an aircraft air duct, an aircraft seating or flight deck component, an aircraft galley, an aircraft stow bin or sidewall, or an ablative in an aerospace application.

Still another aspect of the present invention is directed to the use, in the polymer composition as above described or prepared by the method as above described, of the polyarylene (P2) as fire-stabilizer additive of the polyarylene (P1). According this aspect, the polymer composition of concern may be notably in the form of shaped articles or parts of shaped articles.

Still another aspect of the present invention is directed to the use, in the polymer composition as above described or prepared by the method as above described, of the polyarylene (P2) as toughener of the polyarylene (P1), preferably to increase the elongability of the polyarylene (P1) and/or the impact resistance of the polyarylene (P1). The elongability is advantageously measured by the flexural elongation in accordance with ASTM D-790. The impact resistance is advantageously measured by standard notched and/or unnotched Izod tests, respectively in accordance with ASTM D-256 and ASTM D-4812. According this aspect of the invention, the polymer composition of concern may also be notably in the form of shaped articles or parts of shaped articles.

### THE UNEXPECTED MERITS OF THE PRESENT INVENTION

The invented polymer composition, while offering an exceptionally high level of strength and stiffness (similar to that provided by PRIMOSPIRE^{™} PR-120 and PRIMOSPIRE^{™} PR-250 polyphenylenes), further provides at least one, preferably at least two and still more preferably all the following advantages :
- the polymer material should have increased elongability ; and/or
- the polymer material should have increased impact resistance ; and/or
- the polymer material should have increased fire resistance.

The present invention is described in greater detail below by referring to the examples; however, the present invention is not limited to these examples.

### EXAMPLES

Polyarylene (P1*) was used as polyarylene (P1). Polyarylene (P1*) is a kinked rigid-rod polyphenylene copolymer, essentially all, if not all, the recurring units of which consist of a mix of p-phenylene substituted by a phenylketone group with unsubstituted m-phenylene in a mole ratio p-phenylene:m-phenylene of about 85:15 ; it has a glass transition temperature of about 158 °C. Such a kinked rigid-rod polyphenylene copolymer is commercially available from SOLVAY ADVANCED POLYMERS, L.L.C. as PRIMOSPIRE^{™} PR-120 polyphenylene.

Polyarylene (P2*) was used as polyarylene (P2). Polyarylene (P2*) is a kinked rigid-rod polyphenylene copolymer, essentially all, if not all, the recurring units of which consist of a mix of p-phenylene substituted by a phenylketone group with unsubstituted m-phenylene in a mole ratio p-phenylene:m-phenylene of about 50:50 ; it has a glass transition temperature of about 165 °C. Such a kinked rigid-rod polyphenylene copolymer is commercially available from SOLVAY ADVANCED POLYMERS, L.L.C. as PRIMOSPIRE^{™} PR-250 polyphenylene.

Polyarylene compositions (E1), (E2) and (E3), comprising various proportions by weight of polyarylene (P1*) and polyarylene (P2*), were prepared by melt-mixing the polyarylene (P1*) and the polyarylene (P2*) using a Brabender Plasticorder.

Polyarylene compositions (E1), (E2) and (E3), as well as neat polyarylene controls (P1*) and (P2*), were analyzed by standard physical testing methods. Processing conditions and physical properties are shown in Table 1.

### Example 1: Flexural properties

Flexural properties were determined according to ASTM D790.

Notched Izod impact strength values were determined according to ASTM D256.

Unnotched Izod impact strength values were determined according to ASTM D4812.

The results are reported in table 1.

**Table 1: Flexural properties results**

| | (P1*) control | (E1) | (E2) | (E3) | (P2*) control |
|---|---|---|---|---|---|
| Polyarylene (P1*) (wt. %) | 100 | 95 | 50 | 5 | 0 |
| Polyarylene (P2*) (wt. %) | 0 | 5 | 50 | 95 | 100 |

| Conditions of preparation | | | | | |
|---|---|---|---|---|---|
| Mixing temperature °C | 290 | 290 | 290 | 300 | 300 |
| Torque reading (gram force-meter) | 5000 | 4600 | 4150 | 2500 | 2300 |
| Flexural modulus (Mpsi) (ASTM D-790) | 1.12 | 1.1 | 1.01 | 0.89 | 0.86 |
| Flexural strength (Kpsi) (ASTM D-790) | 44.4 | 44.3 | 41.8 | 38.2 | 38.6 |
| Flexural elongation (%) (ASTM D-790) | 7.8 | 8.8 | 9.3 | 9.4 | 8.5 |

Surprisingly, polymer compositions (E1), (E2) and (E3), while offering an exceptionally high level of strength and stiffness (similar to that provided of PRIMOSPIRE^{™} PR-120 and PRIMOSPIRE^{™} PR-250 controls (P1*) and (P2*)), further exhibited increased flexural elongation, in substantial progress with (P1*) and (P2*) controls [synergistic behaviour].

### Example 2: Impact resistance properties

The notched and unnotched impact resistance of poyarlylene composition (E2) (according to the invention) and of controls (P1*) and (P2*) was measured. The results are reported in table 2.

**Table 2: Impact resistance results**

| | (P1*) control | (E2) | (P2*) control |
|---|---|---|---|
| Polyarylene (P1*) (wt. %) | 100 | 50 | 0 |
| Polyarylene (P2*) (wt. %) | 0 | 50 | 100 |
| Notched Izod impact strength times 10 (ft-lb/inch) (ASTM D-256) | 7.6 | 13.0 | 11.6 |
| Unnotched Izod impact strength (ft-lb/inch) (ASTM D-4812) | 17 | 21 | 20 |

Surprisingly, polymer composition (E2), while offering an exceptionally high level of strength and stiffness (similar to that provided of PRIMOSPIRE^{™} PR-120 and PRIMOSPIRE^{™} PR-250 controls (P1*) and (P2*) - see table 1), further exhibited increased impact resistance, both in terms of notched and unnotched Izod, in substantial progress with (P1*) and (P2*) controls [synergistic behavior].

### Example 3: Fire resistance

An additional polymer composition (E4) was prepared according to the present invention ; this one was composed of 20 wt. % of the polyarylene (P1*) and 80 wt. % of the polyarylene (P2*). Its fire resistance was assessed in comparison with that of (P1*) and (P2*) controls.

To do so, the polymer composition (E4) and the controls (P1*) and (P2*) were further mixed with 0.5 parts by weight of Engelhard Meteor Plus 9875 Black brand pigment, per 100 parts by weight of respectively (E4), (P1*) and (P2*). Then, the so-obtained mixtures were submitted to a certain proprietary fire resistance test, in fact the outermost severe one known from the Applicant so far.

| | (P1*) control | (E4) | (P2*) control |
|---|---|---|---|
| Polyarylene (P1*) (wt. %) | 100 | 20 | 0 |
| Polyarylene (P2*) (wt. %) | 0 | 80 | 100 |
| Notched Izod impact strength (ft-lb/inch) (ASTM D-256) | (FAI-LED)* | PAS-SED | FAI-LED |

| | | | |
|---|---|---|---|
| * The same test was not achieved on (P1*). As a matter of fact, (P1*) failed lamentably on a much softer fire resistance test, which was successfully passed by (P2*). This much softer test is known as the Lindy fire test ; it uses an oxyacetylene torch, at 40.00 °F, held 4 inches from a ¼ inch thick polymer plate. | | | |

Surprisingly, polymer composition (E4), while offering an exceptionally high level of strength and stiffness (similar to that provided of PRIMOSPIRE^{™} PR-120 and PRIMOSPIRE^{™} PR-250 controls (P1*) and (P2*) - see table 1), further exhibited increased fire resistance, in substantial progress with (P1*) and (P2*) controls [synergistic behaviour].

### Example 4

Polymer compositions are prepared consisting of from 5 to 99 wt. % bisphenol A polycarbonate, the remainder being the 50:50 mixture (E2) of polyarylene (P1*) and polyarylene (P2*). The so-prepared polymer compositions exhibit a higher flexural modulus and higher flexural strength than bisphenol A polycarbonate by itself.

### Example 5

Polymer compositions are prepared consisting of from 5 to 99 wt. % polyetheretherketone, the remainder being the 50:50 mixture (E2) of polyarylene (P1*) and polyarylene (P2*). The so-prepared polymer compositions exhibit a higher flexural modulus and higher flexural strength than bisphenol A polycarbonate by itself.

### Example 6: Preparation of foams

Foamable polymer compositions consisting of the 50:50 mixture (E2) of polyarylene (P1*) and polyarylene (P2*), the remainder being a foamable thermoplastic polymer such as a RADEL^{®} R polyphenylsulfone (available from SOLVAY ADVANCED POLYMERS, L.L.C.) are prepared by melt mixing the polymers in a 2.54 cm (1 inch) diameter Killion single screw extruder having a mixing section at a melt temperature of about 320°C. The relative weight amount of the polyphenylene mixture and of the foamable thermoplastic polymer in the foamable polymer compositions may be notably 2.5, 5 or 10 %. The foamable polymer compositions are compression molded in a 10.2 cm x 10.2 cm (4 inch x 4 inch) square mold at a temperature of about 330°C and 6.9 10⁶ Pa (1000 psi) for 30 minutes. The resulting plaques are then supercritically foamed as described in Baldwin, D., et al., Polymer Engineering and Science, vol. 36 (11), pp. 1437-1445 (1996). The bulk foam density of the foams composed of the foamable polymer compositions is lower than bulk foam density of the foams composed of the foamable thermoplastic resin alone.

## Claims

1. Polymer composition comprising :
- at least one polyarylene (P1), of which the efficient arylene recurring units (R1) are a mix (M1) consisting of :
- from 70 mole % to 100 mole %, based on the total number of moles of efficient arylene recurring units (R1), of rigid rod-forming arylene units (Ra), said rigid rod-forming arylene units (Ra) being optionally substituted by at least one monovalent substituting group with
- from 0 to 30 mole %, based on the total number of moles of efficient arylene recurring units (R1), of kink-forming arylene units (Rb), said kink-forming arylene units being optionally substituted by at least one monovalent substituting group,
and
- at least one polyarylene (P2), of which the efficient arylene recurring units (R2) are a mix (M2) consisting of :
- less than 70 mole %, down to 0 mole %, based on the total number of moles of efficient arylene recurring units (R2), of rigid rod-forming arylene units (Ra), said rigid rod-forming arylene units (Ra) being optionally substituted by at least one monovalent substituting group
with
- more than 30 mole %, up to 100 mole %, based on the total number of moles of efficient arylene recurring units (R2), of kink-forming arylene units (Rb), said kink-forming arylene units being optionally substituted by at least one monovalent substituting group.

2. Polymer composition according to claim 1, **characterized in that** the polyarylene (P1) is a kinked rigid-rod polyphenylene copolymer, essentially all the recurring units of which consist of a mix (M1) of p-phenylene substituted by a phenylketone group with unsubstituted m-phenylene in a mole ratio p-phenylene:m-phenylene of from 79:21 to 95:5.

3. Polymer composition according to claim 1 or 2, **characterized in that** the polyarylene (P2) is a kinked rigid-rod polyphenylene copolymer, essentially all the recurring units of which consist of a mix (M2) of p-phenylene substituted by a phenylketone group with unsubstituted m-phenylene in a mole ratio p-phenylene:m-phenylene of from 35:65 to 60:40.

4. Polymer composition according to any one of the preceding claims, **characterized in that** essentially all the recurring units of the polyarylene (P1) are efficient arylene recurring units (R1) and essentially all the recurring units of the polyarylene (P2) are efficient arylene recurring units (R2).

5. Polymer composition according to any one of the preceding claims, **characterized in that** the weight of the polyarylene (P2), based on the combined weight of the polyarylene (P1) and the polyarylene (P2), ranges from 5 % to 95 %.

6. Polymer composition according to claim 5, **characterized in that** the weight of the polyarylene (P2), based on the combined weight of the polyarylene (P1) and the polyarylene (P2), ranges from 40 % to 85 %.

7. Polymer composition according to claim 6, **characterized in that** the weight of the polyarylene (P2), based on the combined weight of the polyarylene (P1) and the polyarylene (P2), ranges from 40 % to 65 %.

8. Polymer composition according to claim 6, **characterized in that** the weight of the polyarylene (P2), based on the combined weight of the polyarylene (P1) and the polyarylene (P2), ranges between 65 %, up to 85 %.

9. Polymer composition according to any one of the preceding claims, **characterized in that** the combined weight of the polyarylene (P1) and of the polyarylene (P2), based on the total weight of the polymer composition, is above 80 %.

10. Polymer composition according to claim 9, **characterized in that** it consists essentially of the polyarylene (P1) and the polyarylene (P2).

11. Method for preparing the polymer composition according to any one of the preceding claims, **characterized in that** it comprises melt mixing the polyarylene (P1) with the polyarylene (P2).

12. Shaped article or part of a shaped article comprising the polymer composition according to any one of claims 1 to 10 or prepared by the method of claim 11.

13. Shaped article or part of a shaped article according to claim 12, **characterized in that** is is chosen from films, fibers, coatings and membranes.

14. Use, in the polymer composition according to any one of claims 1 to 10 or prepared by the method of claim 11, of the polyarylene (P2) as fire-stabilizer additive of the polyarylene (P1).

15. Use, in the polymer composition according to any one of claims 1 to 10 or prepared by the method of claim 11, of the polyarylene (P2) as toughener of the polyarylene (P1).

## Patentansprüche

1. Polymerzusammensetzung, umfassend:
■ mindestens ein Polyarylen (P1), bei dessen effizienten Arylen-Wiederholungseinheiten (R1) es sich um eine Mischung (M1) handelt, die aus
- 70 Mol-% bis 100 Mol-%, bezogen auf die Gesamtmolzahl von effizienten Arylen-Wiederholungseinheiten (R1), Rigid-Rod-bildenden Aryleneinheiten (Ra), die gegebenenfalls durch mindestens eine einwertige Substitutionsgruppe substituiert sind,
mit
- 0 bis 30 Mol-%, bezogen auf die Gesamtmolzahl von effizienten Arylen-Wiederholungseinheiten (R1), knickbildenden Aryleneinheiten (Rb), die gegebenenfalls durch mindestens eine einwertige Substitutionsgruppe substituiert sind,
besteht, und
■ mindestens ein Polyarylen (P2), bei dessen effizienten Arylen-Wiederholungseinheiten (R2) es sich um eine Mischung (M2) handelt, die aus
- weniger als 70 Mol-% bis 0 Mol-%, bezogen auf die Gesamtmolzahl von effizienten Arylen-Wiederholungseinheiten (R2), Rigid-Rod-bildenden Aryleneinheiten (Ra), die gegebenenfalls durch mindestens eine einwertige Substitutionsgruppe substituiert sind,
mit
- mehr als 30 Mol-% bis zu 100 Mol-%, bezogen auf die Gesamtmolzahl von effizienten Arylen-Wiederholungseinheiten (R2), knickbildenden Aryleneinheiten (Rb), die gegebenenfalls durch mindestens eine einwertige Substitutionsgruppe substituiert sind,
besteht.

2. Polymerzusammensetzung nach Anspruch 1, **dadurch gekennzeichnet, daß** es sich bei dem Polyarylen (P1) um ein geknicktes Rigid-Rod-Polyphenylencopolymer handelt, dessen Wiederholungseinheiten im wesentlichen alle aus einer Mischung (M1) von p-Phenylen, das durch eine Phenylketongruppe substituiert ist, mit unsubstituiertem m-Phenylen in einem Molverhältnis von p-Phenylen zu m-Phenylen von 79:21 bis 95:5 bestehen.

3. Polymerzusammensetzung nach Anspruch 1 oder 2, **dadurch gekennzeichnet, daß** es sich bei dem Polyarylen (P2) um ein geknicktes Rigid-Rod-Polyphenylencopolymer handelt, dessen Wiederholungseinheiten im wesentlichen alle aus einer Mischung (M2) von p-Phenylen, das durch eine Phenylketongruppe substituiert ist, mit unsubstituiertem m-Phenylen in einem Molverhältnis von p-Phenylen zu m-Phenylen von 35:65 bis 60:40 bestehen.

4. Polymerzusammensetzung nach einem der vorhergehenden Ansprüche, **dadurch gekennzeichnet, daß** es sich bei im wesentlichen allen Wiederholungseinheiten des Polyarylens (P1) um effiziente Arylen-Wiederholungseinheiten (R1) handelt und es sich bei im wesentlichen allen Wiederholungseinheiten des Polyarylens (P2) um effiziente Arylen-Wiederholungseinheiten (R2) handelt.

5. Polymerzusammensetzung nach einem der vorhergehenden Ansprüche, **dadurch gekennzeichnet, daß** das Gewicht des Polyarylens (P2), bezogen auf das kombinierte Gewicht des Polyarylens (P1) und des Polyarylens (P2), im Bereich von 5% bis 95% liegt.

6. Polymerzusammensetzung nach Anspruch 5, **dadurch gekennzeichnet, daß** das Gewicht des Polyarylens (P2), bezogen auf das kombinierte Gewicht des Polyarylens (P1) und des Polyarylens (P2), im Bereich von 40% bis 85% liegt.

7. Polymerzusammensetzung nach Anspruch 6, **dadurch gekennzeichnet, daß** das Gewicht des Polyarylens (P2), bezogen auf das kombinierte Gewicht des Polyarylens (P1) und des Polyarylens (P2), im Bereich von 40% bis 65% liegt.

8. Polymerzusammensetzung nach Anspruch 6, **dadurch gekennzeichnet, daß** das Gewicht des Polyarylens (P2), bezogen auf das kombinierte Gewicht des Polyarylens (P1) und des Polyarylens (P2), im Bereich zwischen 65% und 85% liegt.

9. Polymerzusammensetzung nach einem der vorhergehenden Ansprüche, **dadurch gekennzeichnet, daß** das kombinierte Gewicht des Polyarylens (P1) und des Polyarylens (P2), bezogen auf das Gesamtgewicht der Polymerzusammensetzung, über 80% liegt.

10. Polymerzusammensetzung nach Anspruch 9, **dadurch gekennzeichnet, daß** sie im wesentlichen aus dem Polyarylen (P1) und dem Polyarylen (P2) besteht.

11. Verfahren zur Herstellung der Polymerzusammensetzung nach einem der vorhergehenden Ansprüche, **dadurch gekennzeichnet, daß** man das Polyarylen (P1) mit dem Polyarylen (P2) in der Schmelze vermischt.

12. Formkörper oder Teil eines Formkörpers, umfassend die Polymerzusammensetzung nach einem der Ansprüche 1 bis 10 oder die nach dem Verfahren nach Anspruch 11 hergestellte Polymerzusammensetzung.

13. Formkörper oder Teil eines Formkörpers nach Anspruch 12, **dadurch gekennzeichnet, daß** er bzw. es aus der Gruppe bestehend aus Folien, Fasern, Überzügen und Membranen ausgewählt ist.

14. Verwendung des Polyarylens (P2) in der Polymerzusammensetzung nach einem der Ansprüche 1 bis 10 oder der nach dem Verfahren nach Anspruch 11 hergestellten Polymerzusammensetzung als Brandstabilisatoradditiv für das Polyarylen (P1).

15. Verwendung des Polyarylens (P2) in der Polymerzusammensetzung nach einem der Ansprüche 1 bis 10 oder der nach dem Verfahren nach Anspruch 11 hergestellten Polymerzusammensetzung als Schlagzähigkeitsverbesserer für das Polyarylen (P1).

## Revendications

1. Composition polymère, comprenant :
■ au moins un polyarylène (P1), dont les unités de répétition arylène efficaces (R1) sont un mélange (M1) constitué par :
- de 70 % en moles à 100 % en moles, par rapport au nombre total de moles d'unités de répétition arylène efficaces (R1), d'unités arylène formant des tiges rigides (Ra), lesdites unités arylène formant des tiges rigides (Ra) étant éventuellement substituées par au moins un groupe de substitution monovalent
avec
- de 0 à 30 % en moles, par rapport au nombre total de moles d'unités de répétition arylène efficaces (R1), d'unités arylène formant des coudes (Rb), lesdites unités arylène formant des coudes étant éventuellement substituées par au moins un groupe de substitution monovalent,
et
■ au moins un polyarylène (P2), dont les unités de répétition arylène efficaces (R2) sont un mélange (M2) constitué par :
- moins de 70 % en moles, jusqu'à 0 % en moles, par rapport au nombre total de moles d'unités de répétition arylène efficaces (R2), d'unités arylène formant des tiges rigides (Ra), lesdites unités arylène formant des tiges rigides (Ra) étant éventuellement substituées par au moins un groupe de substitution monovalent
avec
- plus de 30 % en moles, jusqu'à 100 % en moles, par rapport au nombre total de moles d'unités de répétition arylène efficaces (R2), d'unités arylène formant des coudes (Rb), lesdites unités arylène formant des coudes étant éventuellement substituées par au moins un groupe de substitution monovalent.

2. Composition polymère selon la revendication 1, **caractérisée en ce que** le polyarylène (P1) est un copolymère de polyphénylène à tiges rigides coudé, dont essentiellement toutes les unités de répétition sont constituées par un mélange (M1) de p-phénylène substitué par un groupe phénylcétone avec du m-phénylène non substitué en un rapport molaire p-phénylène:m-phénylène de 79:21 à 95:5.

3. Composition polymère selon la revendication 1 ou 2, **caractérisée en ce que** le polyarylène (P2) est un copolymère de polyphénylène à tiges rigides coudé, dont essentiellement toutes les unités de répétition sont constituées par un mélange (M2) de p-phénylène substitué par un groupe phénylcétone avec du m-phénylène non substitué en un rapport molaire p-phénylène:m-phénylène de 35:65 à 60:40.

4. Composition polymère selon l'une quelconque des revendications précédentes, **caractérisée en ce qu'**essentiellement toutes les unités de répétition du polyarylène (P1) sont des unités de répétition arylène efficaces (R1) et essentiellement toutes les unités de répétition du polyarylène (P2) sont des unités de répétition arylène efficaces (R2).

5. Composition polymère selon l'une quelconque des revendications précédentes, **caractérisée en ce que** le poids du polyarylène (P2), par rapport au poids combiné du polyarylène (P1) et du polyarylène (P2), est de 5 % à 95 %.

6. Composition polymère selon la revendication 5, **caractérisée en ce que** le poids du polyarylène (P2), par rapport au poids combiné du polyarylène (P1) et du polyarylène (P2), est de 40 % à 85 %.

7. Composition polymère selon la revendication 6, **caractérisée en ce que** le poids du polyarylène (P2), par rapport au poids combiné du polyarylène (P1) et du polyarylène (P2), est de 40 % à 65 %.

8. Composition polymère selon la revendication 6, **caractérisée en ce que** le poids du polyarylène (P2), par rapport au poids combiné du polyarylène (P1) et du polyarylène (P2), est de 65 % à 85 %.

9. Composition polymère selon l'une quelconque des revendications précédentes, **caractérisée en ce que** le poids combiné du polyarylène (P1) et du polyarylène (P2), par rapport au poids total de la composition polymère, est supérieur à 80 %.

10. Composition polymère selon la revendication 9, **caractérisée en ce qu'**elle est essentiellement constituée par le polyarylène (P1) et le polyarylène (P2).

11. Procédé de préparation de la composition polymère selon l'une quelconque des revendications précédentes, **caractérisé en ce qu'**il comprend le mélange à l'état fondu du polyarylène (P1) avec le polyarylène (P2).

12. Article façonné ou partie d'un article façonné, comprenant la composition polymère selon l'une quelconque des revendications 1 à 10 ou préparée par le procédé selon la revendication 11.

13. Article façonné ou partie d'un article façonné selon la revendication 12, **caractérisé en ce qu'**il est choisi parmi les films, les fibres, les revêtements et les membranes.

14. Utilisation, dans la composition polymère selon l'une quelconque des revendications 1 à 10 ou préparée par le procédé selon la revendication 11, du polyarylène (P2) en tant qu'additif de stabilisation contre le feu du polyarylène (P1).

15. Utilisation, dans la composition polymère selon l'une quelconque des revendications 1 à 10 ou préparée par le procédé selon la revendication 11, du polyarylène (P2) en tant qu'agent renforçant du polyarylène (P1).
